# EUROPEAN PATENT APPLICATION

(11) **EP 2 180 369 A1**
(43) Date of publication of application: **28.04.2010**
(21) Application number: 08791902.3
(22) Date of filing: 30.07.2008
(51) Int. Cl.: G02F 1/1337, G02F 1/13, G02F 1/1343

(54) **LIQUID CRYSTAL DISPLAY DEVICE AND ITS MANUFACTURING METHOD**

(30) Priority: 08.08.2007 JP 2007207070
(71) Applicant: Sharp Kabushiki Kaisha, Osaka-shi, Osaka 545-8522 (JP)
(72) Inventor: UEDA, Takashi, Osaka-shi, Osaka 545-8522 (JP)
(74) Representative: Müller - Hoffmann & Partner
(86) International application number: PCT/JP2008/063671
(87) International publication number: WO 2009/020027

(57) **Abstract**

The present invention provides a liquid crystal display device including projections for liquid crystal alignment control, wherein charges remaining in a substrate or substrates are discharged, thereby suppressing uneven display, and a production method thereof. The present invention is a liquid crystal display device including:
a pair of substrates facing each other;
a liquid crystal layer interposed between the pair of substrates; and
a sealing member surrounding the liquid crystal layer and attaching the pair of substrates to each other,
wherein at least one of the pair of substrates includes a projection for liquid crystal alignment control in a display region, and
further includes, in a frame region that is positioned between the display region and the sealing member, a region free from a film made of a material for the projection.

## Description

### TECHNICAL FIELD

The present invention relates to a liquid crystal display device and a production method thereof. More particularly, the present invention relates to a liquid crystal display device that includes projections for liquid crystal alignment control and that is preferably used as a multi-domain VA liquid crystal display device. The present invention also relates to a production method thereof.

### BACKGROUND ART

Liquid crystal display devices are display devices with slim profile and low power consumption and are being widely used in OA equipment such as a PC, PDAs such as an electronic notebook and a cellular phone, monitors of camcorder movies, and the like. The market thereof is growing more every year. Along with such expansion of the market, the liquid crystal display devices need for a further improvement in image qualities such as viewing angle characteristics and response rate and for an increase in screen size.

Various displaymodes of the liquid crystal display devices are known, and MVA (multi-domain vertical alignment) mode, which is a kind of VA mode, is known as one providing excellent viewing angle characteristics (for example, see Patent Document 1) . VA liquid crystal display devices align negative liquid crystals with negative dielectric anisotropy vertically to substrate surfaces upon application of a voltage lower than a threshold voltage (for example, under no voltage application) and align them horizontally thereto upon application of a voltage not lower than the threshold voltage. According to the MVA liquid crystal display devices, a substrate surface is provided with a structure for alignment control of liquid crystal molecules, such as a projective dielectric material (also referred to as a "projection for liquid crystal alignment control") and an electrode slit, and using this structure, each pixel region is divided into domains and alignment of the liquid crystal molecules is controlled on each domain basis. Such a control method is generally called as alignment division. This alignment division provides an improvement in response rate and a wide viewing angle in MVA mode.

In production of liquid crystal display devices, two substrates are attached to each other with a space into which liquid crystals are arranged. It is known that the substrate or the substrates is/are held by electrostatic chuck during the attachment.
[Patent Document 1]
Japanese Kokai Publication No. 2005-309267

### DISCLOSURE OF INVENTION

The use of electrostatic chuck for attachment of two substrates possibly leads to uneven display of liquid crystal display devices. Electrostatic chuck involves application of a high voltage and so charges are accumulated in a substrate held by electrostatic chuck. If these accumulated charges remain in the substrate without being sufficiently discharged, liquid crystal alignment can not be properly controlled, which causes uneven display. This uneven display is gradually lessened with operating time. However, a device with uneven display is determined as a panel defect if the uneven display is detected not only when shipped but also when examined during assembly. This needs an additional process, reexamination, and the like. Thus, liquid crystal display devices can not be stably produced when a substrate or substrates to be attached is held by the electrostatic chuck.

The present invention has been made in view of the above-mentioned state of the art. The present invention has an object to provide a liquid crystal display device including projections for liquid crystal alignment control, wherein charges remaining in a substrate or substrates is/are discharged, thereby suppressing uneven display, and also provide a production method thereof.

The present inventor made various investigations on uneven display that is detected in an examination step and the like after a substrate-attaching step. The inventor found that charges remain in a substrate or substrates that has/have been held by electrostatic chuck in the substrate-attaching step, and the remaining charges disable proper control of liquid crystal alignment, which causes uneven display. After further studies, the inventor noted that this uneven display is not caused when a film that is formed in a frame region that is positioned between a display region and a sealing member and that is made of the same material as that for a projection for liquid crystal alignment control formed in the display region has a resistance higher than that of liquid crystals. Then the inventor found that the charges remaining in the substrate or the substrates after the holding by electrostatic chuck can be discharged when the film made of the material for the projection, which is conventionally formed over the entire frame region, is removed from the frame region. As a result, theabove-mentionedproblems have been admirably solved, leading to completion of the present invention.

That is, the present invention is a liquid crystal display device including:
a pair of substrates facing each other;
a liquid crystal layer interposed between the pair of substrates; and
a sealing member surrounding the liquid crystal layer and attaching the pair of substrates to each other,
wherein at least one of the pair of substrates includes a projection for liquid crystal alignment control in a display region, and
further includes, in a frame region that is positioned between the display region and the sealing member, a region free from a film made of a material for the projection.
The present invention is mentioned in detail below.

The liquid crystal display device of the present invention includes a pair of substrates facing each other, a liquid crystal layer interposed between the substrates, and a sealing member that is arranged around the liquid crystal layer to attach the substrates to each other. The pair of substrates is not especially limited and is preferably substrates that can be held by electrostatic chuck. For example, a substrate including an insulating substrate such as a glass substrate and components that are formed thereon and that constitute a liquid crystal display device is mentioned. It is more preferable that a conductive film is arranged on the insulating substrate such as a glass substrate. Attributed to this conductive film, coulomb force generated between an electrode for electrostatic chuck and the substrate can be increased, which permits more stable holding of the substrate. The holding by electrostatic chuck allows a large-sized substrate to be stably held in an attachment step and the like. It is preferable that the liquid crystal layer includes liquid crystal molecules with negative dielectric anisotropy. It is preferable that the liquid crystal display device is a VA liquid crystal display device. The above-mentioned sealing member is not especially limited as long as it can attach the substrates to each other. A UV curable resin, a thermocurable resin, and the like, may be used as the sealing member.

At least one of the pair of substrates includes projections for liquid crystal alignment control in the display region. The projections are not especially limited as long as they can control alignment of the liquid crystal molecules in the liquid crystal layer. It is preferable that such projections contribute to formation of domains, which are regions strongly associated with alignment of the liquid crystal molecules . It is more preferable that such projections are arranged so that each pixel has plural domains with equal areas. Attributed to these projections, an alignment division liquid crystal display device such as MVA one having a wide viewing angle and a high response rate, and the like, can be provided.

The projections may be arranged in a dotted or linear pattern and are preferably arranged equally spaced in order to equalize responsivity of the liquid crystal molecules in the liquid crystal layer, thereby improving display qualities. It is preferable that the projections have a tilt side surface, for example, have a conical shape when arranged in a dot pattern. Further, it is preferable that the side surface is tilted at a uniform angle from the top to the bottom. The material for the projections is not especially limited. A photosensitive material is preferable in view of easy formation of the projection. From viewpoint of sufficiently exhibiting advantages of the present invention, it is preferable that the projections are made of a material with a higher resistance than that of the liquid crystal layer. The resistance of the liquid crystal material is generally 1 x 10¹⁵ to 1 x 10¹⁶ Ωm. A photosensitive resin, which is a material for the projection, has a resistance of 1 x 10¹⁶ to 1 x 10¹⁷ Ωm, which is larger than that of the liquid crystal material by one digit. Accordingly, an insulator made of a photosensitive acrylic resin or novolac resin, and the like, is preferably used.

The term "display region" used herein is a region where images are displayed, and it means a region surrounded by a line connecting outermost pixels (pixels are basic units for displaying an image) to one another when the substrates constituting the liquid crystal display device are viewed from the substrate normal direction. A region between color filters constituting pixels is included in the display region, for example.

The above-mentioned substrate including the projection in the display region includes a region free from a film (hereinafter, also referred to as a "projection material film") made of a material for the projection in the frame region that is positioned between the display region and the sealing member. It is preferable that the projection material film has a resistance higher than that of the liquid crystal layer, similarly to the material for the projection. According to this, a resistance between the substrates in the frame region can be decreased in comparison to the case where the projection material film is arranged in the entire frame region, and as a result, charges accumulated in the projection-including substrate can be easily discharged toward the opposite substrate through the liquid crystal layer. Thus, uneven display can be suppressed from being detected, for example, when lighting examination of the liquid crystal display device is performed.

The production step of the liquid crystal display device in which charges are accumulated in the above-mentioned projection-including substrate, for example, includes a step of holding a substrate or substrates by electrostatic chuck, thereby attaching the pair of substrates. In such a case, charges are accumulated in an insulating film, an alignment film, and the like, constituting the substrate or the substrates that is/are held by electrostatic chuck. According to the present invention, the charges accumulated in the substrate or the substrates during such a step can be effectively discharged.

The region free from the projection material film may be at least a part of or the entire region of the frame region. The projection material film can be formed simultaneously when the projection is formed, and so it is preferable that the projection materialfilmisarrangedin the projection-including substrate. It is more preferable that the projection material film is formed by patterning the same film constituting the projection. According to this, the advantages of the present invention can be exhibited without an increase in the number of production steps.

The liquid crystal display device of the present invention may or may not include other components as long as it includes the above-mentioned components, i.e., the pair of substrates, the liquid crystal layer, the sealing member, the projection, and the projection material film.

### Preferable embodiments of the present invention are mentioned below.

The liquid crystal display device of the present invention has an embodiment (hereinafter, also referred to as a "first embodiment") in which the liquid crystal display device includes a region where the film made of the material for the projection is arranged in the frame region of the projection-including substrate (the at least one of the pair of substrates including the projection) or has an embodiment (hereinafter, also referred to as a "second embodiment") in which the film made of the material for the projection is not arranged in the frame region of the projection-including substrate.

According to the first embodiment, the projection material film is partly arranged in the frame region, and as a result, the frame region includes a region where the resistance between the substrates is relatively high (the region where the film is arranged) and a region where the resistance between the substrates is relatively low (the region free from the film) . When the charges are discharged toward the opposite substrate through the liquid crystal layer, the accumulated charges are concentrated in the region with low resistance. Then an electric flux density of the region with low resistance is increased, which allows efficient discharge of the charges accumulated in the substrate including the projection material film. A leakage current tends to increase exponentially with respect to a voltage applied to a sample particularly if a leakage current through an insulator and the like, which is not simply in accordance with Ohm' law, is taken into consideration. So in such a case, efficiency in the discharge is possibly high when the electric field is concentrated in the region with low resistance. From viewpoint of discharging the charges, it is preferable that the region free from the projection material film has a long perimeter when the regions free from the projection material film, having the same area, are compared. For example, it is preferable that the regions have such a shape that apexes of the regions are connected to each other by a curve rather than by a straight line. The charges can be efficiently discharged when the perimeter is long. When the accumulated charges are discharged, a difference in electric flux density between the region where the projection material film is arranged and the region free from such a film is large, which results in that discharge of charges from a boundary between the two regions tends to be accelerated. If the region free from the projection material film is divided into two or more regions, it is preferable that the total perimeter of the regions is long.

According to the first embodiment, it is preferable that the projection-including substrate includes a first conductive film in the display region, and further includes, in the frame region, a second conductive film formed in continuity with the first conductive film or a third conductive film made of a material for the first conductive film, and
the filmmade of the material for the projection is arranged on the second conductive film (on the liquid crystal layer side of the conductive film in the frame region) or on the third conductive film (on the liquid crystal layer side of the conductive film in the frame region).
The second or third conductive film is arranged in the frame region, and thus the thickness of the liquid crystal material arranged between the substrates in the frame region is decreased by the thickness of the second or third conductive film. As a result, the resistance between the substrates in the frame region can be decreased. Further, the production steps can be simplified when the first conductive film in the display region and the second or third conductive film in the frame region are formed in the same step and then the projection in the display region and the projection material film in the frame region can be formed in the same step. It is more preferable that the projection material film is partly arranged on the second or third conductive film, which is arranged in the entire frame region. This makes it easy for the accumulated charges to move from the region with the projection material film to the region free from the film within the frame region.

It is preferable that the first conductive film in the display region is a common orpixel electrode made of a transparent conductive material. It is preferable that the second or third conductive film is a transparent conductive film formed by the same film-forming step and patterning step as those of a common or pixel electrode. It is more preferable that the third conductive film is formed by the same film-forming step and/or patterning step as those of the first conductive film in the display region. Indium tin oxide, indium zinc oxide, and the like, are mentioned as a material for the transparent conductive film. The pixel electrode and the common electrode are arranged for applying a voltage to the liquid crystal layer.

According to the first embodiment, it is preferable that the film made of the material for the projection is formed into a stripe or comb shape. In such a case, the perimeter of the projection material film can be efficiently increased, and the accumulated charges can be more efficiently discharged from the projection-including substrate through the liquid crystal layer to the opposite substrate. Both of the stripe pattern and the comb pattern may exist.

According to the first embodiment, it is preferable that the film made of the material for the projection has an opening. The opening has a circular, elliptical, polygonal shape, etc. It is more preferable that the projection material film has two or more openings in order to decrease the resistance between the substrates in the frame region and increase the perimeter of the region free from such a film. Further, the accumulated charges are usually discharged more efficiently from a side surface of the opening, which is an interface between the liquid crystal layer and the projection material film. So it is preferable that the opening has a polygonal shape having a long perimeter when the regions free from the projection material film in the frame region, having the same area, are compared.

It is preferable that the opening has an angular shape. If the opening has an angular shape when viewed in the normal direction of the substrate surface, an electric flux density at the angular portion is increased, and the accumulated charges can be discharged with more efficiency at this part. Examples of the angular shape include triangular, quadrangular, and pentagonal shapes. Such an angular-shaped opening has a perimeter longer than a circular opening with the same area, which leads to more efficient discharge. The opening may have a shape that can be equated with a triangular, quadrangular, pentagonal shape, etc. , in view of the advantages of the present invention. The opening typically has a rounded corer if it is formed by etching and the like.

According to the second embodiment, the resistance between the substrates in the entire frame region is decreased, which leads to an improvement in efficiency in discharge.

According to the second embodiment, it is preferable that the projection-including substrate includes a first conductive film in the display region, and further includes, in the frame region, a second conductive film formed in continuity with the first conductive film or a third conductive filmmade of a material for the first conductive film. It is preferable that the second or third conductive film arranged in the frame region is formed by the same film-forming step and patterning step as those of a common or pixel electrode arranged in the display region. The second or third conductive film is arranged, thereby reducing the resistance between the substrates in the frame region. As a result, the efficiency in discharge from the frame region can be more increased. The second or third conductive film may be arranged over the entire frame region, which can accelerate the discharge from the entire frame region through the liquid crystal layer.

According to the first and second embodiments, it is preferable that the projection-including substrate is a color filter substrate, and
the first and second conductive films are common electrodes. In this case, the first conductive film, which is positioned in the display region, is formed in continuity with the second conductive film, which is positioned in the frame region. The common electrode in the color filter substrate can be arranged over the entire display region and frame region. According to this, charges accumulated in the display region can be moved to the frame region with efficiency. As a result, the charges can be more discharged from the frame region. Further, the first and second conductive films can be formed in the same step of forming the common electrode, which can prevent an increase in the number of production steps.

The present invention is also a production method of a liquid crystal display device including a pair of substrates facing each other, a liquid crystal layer interposed between the pair of substrates, and a sealing member surrounding the liquid crystal layer and attaching the pair of substrates to each other,
the production method including:
a film-forming step of forming a projection material film for constituting a projection for liquid crystal alignment control in a display region and a frame region that is between the display region and the sealing member of at least one of the pair of substrates;
a patterning step of partly removing the projection material film to form the projection in the display region and to form a region free from the projection material film in the frame region; and
a holding step of holding the projection-including substrate by electrostatic chuck.
Thus, at least a part of the projection material film in the frame region is removed, which allows a reduction in resistance of the frame region.
As a result, the accumulated charges can be discharged from the frame region, which can suppress the charges from remaining in the display region.

In the above-mentioned film-forming step, the film may be formed over the display region and the frame region at one time or may be formed separately from the display region and the frame region, but preferably formed at one time in view of reduction in the number of production steps and in production costs. In the patterning step, the film may be patterned over the display region and the frame region at one time or may be separately patterned from the display region and the frame region, but preferably patterned at one time in view of reduction in the number of production steps and in production costs.

According to the production method of the present invention, the projection material film is selectively removed, thereby removing it in the entire frame region or removing it in portions of the frame region. If the projection material film in the entire frame region is removed, the efficiency in discharge from the frame region is increased. It is preferable that the projection material film is formed in a stripe pattern and/or a comb pattern if the projection material film is formed in the frame region.

It is preferable that the projection material film has an opening. The opening has a circular, elliptical, polygonal shape, etc. It is preferable that the opening has an angular shape. Examples of the angular shape include triangular, quadrangular, and pentagonal shapes. If the opening has an angular shape, an electric flux density at the angular portion is increased, and the charges can be discharged with more efficiency at this part.

According to electrostatic chuck, a sample that is arranged on a sample stage with an insulator therebetween is held by force generated between the stage and the sample by applying a voltage between them. If a substrate is held by electrostatic chuck, coulomb force is generated in an insulator-including substrate and charges are accumulated therein. According to the production method of the liquid crystal display device of the present invention, the frame region has a region free from the projection material film, and thereby discharge of the charges accumulated in the substrate during the electrostatic chuck can be accelerated. Attributed to use of electrostatic chuck, the substrate can be held by the entire stage surface and it can be more stably held in comparison to the case it is mechanically held. This is particularly effectively employed when large substrates are attached to each other. It is preferable that the substrate includes a conductor if it is held by electrostatic chuck. Contributed to the conductor, the coulomb force generated between the substrate and the stage holding the substrate is enhanced, and as a result, the substrate can be more stably held. The electrostatic chuck is provided by a unit that is so configured that four electrodes are arranged one at each corner of a square stage and a pair of two diagonally opposite electrodes of the four are positive electrodes and the other pair thereof is negative electrodes. The positive electrode and the negative electrode are arranged spaced apart. A glass substrate including a conductive film is placed on the unit having such a configuration, and a voltage is applied between the electrode and the conductive film, thereby generating coulomb force therebetween. Thus, the glass substrate can be more stably held by electrostatic chuck.

It is preferable that the production method includes a step of forming a conductive film over the display region and the frame region before the film-forming step. According to this, the conductive film is arranged in the frame region, and thereby the resistance between the substrates in the frame region can be decreased. So the charges accumulated in the substrate can be discharged from the frame region through the liquid crystal layer. The step of forming the conductive film in the frame region and the display region can be performed in the same film-forming and patterning steps. For example, the conductive film can be formed in the step of forming a common electrode or a pixel electrode, and the like, which can suppress an increase in the number of production steps. Further, it is preferable that the conductive film in the display region is formed in continuity over the frame region if it is a common electrode formed in the display region in the color filter substrate. According to this, an increase in the number of production steps can be prevented, and further the charges accumulated in the display region can be discharged from the frame region. As a result, the efficiency in discharge from the frame region can be more improved.

It is preferable that the projection-including substrate that is being held in the holding step is attached to the other substrate, and
the production method further includes a discharge step of putting an electrically conductive pin against the other substrate. The charges in the substrates are discharged through the positions where the electrically conductive pins are in contact with the substrate. For example, if the projection material film is arranged in the entire frame region, the charges are more highly discharged through such positions in the display region and the charges accumulated in the substrate are concentrated at such positions. If this discharge is insufficient, the charges concentrated at the positions tend to remain. This disables proper control of the liquid crystal alignment at those positions, resulting in uneven display. In contrast, according to the present invention, the charges can be more highly discharged from the frame region because the projection material film in the frame region is removed. This makes it possible to suppress the charges from remaining in the display region, and as a result, uneven display can be prevented.

### EFFECT OF THE INVENTION

According to the liquid crystal display device of the present invention, the charges accumulated in the substrate can be discharged from the frame region efficiently. As a result, uneven display which is caused when the accumulated charges remaining in the substrate disables proper control of liquid crystal alignment can be suppressed.

### BEST MODES FOR CARRYING OUT THE INVENTION

The present invention is mentioned in more detail below with reference to Embodiments using drawings, but not limited thereto.

### Embodiment 1

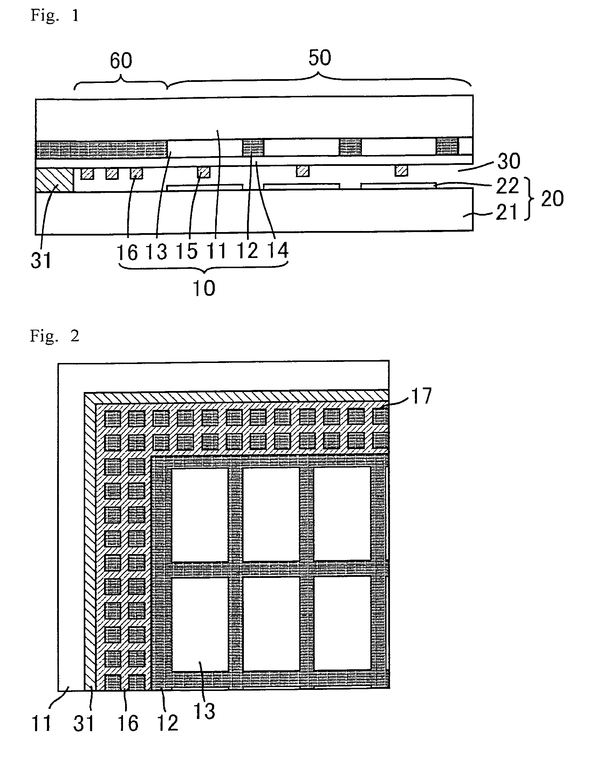

Fig. 1 is a cross-sectional view schematically showing a liquid crystal display device in accordance with Embodiment 1. The liquid crystal display device of Embodiment 1 includes a color filter (CF) substrate 10, a thin film transistor (TFT) substrate 20, and a liquid crystal layer 30 interposed between the substrates 10 and 20. The liquid crystal layer 30 contains liquid crystal materials with negative dielectric anisotropy. A space between the substrates 10 and 20 is sealed by a sealing member 31. Although not shown in Fig. 1, a liquid crystal display panel including the CF substrate 10, the TFT substrate 20, the liquid crystal layer 30, and the sealing member 31 further includes a polarizer, a retarder, a driver, a backlight, and the like mounted therein. The frame region is a region that is positioned on the outside of a display region and on the inside of a region where the sealing member is arranged. According to Embodiment 1, the frame region 60 is a region positioned on the outside of a display region 50 where color filters 13 and pixel electrodes 22 are arranged and on the inside of a region where the sealing member 31 is arranged.

The TFT substrate 20 includes an element substrate 21, and a pixel electrode 22 with a thickness of 100 to 200 nm and a vertical alignment film (not shown) formed on the substrate 21. The element substrate 21 has the following configuration: a plurality of gate lines extend in parallel; a plurality of source lines extend in parallel; the gate lines and the source lines are perpendicular to each other on an insulating substrate such as a glass substrate; TFTs are arranged at intersections of the two lines; and an interlayer insulating film is arranged on the TFTs. As for the TFT, the gate electrode is connected to the gate signal line. The source electrode is connected to the source signal line. The drain electrode is connected to the pixel electrode 22.

The CF substrate 10 has such a configuration that the color filters 13 of red, blue and green each having a thickness of 1000 to 2000 nm are arranged in the display region 50 in a substrate 11 so as to correspond to the pixel electrodes 22, which are formed in the TFT substrate 20, and a BM (black matrix) 12 with a thickness of 1000 to 2000 nm is arranged between the color filters 13. Thereon (on the liquid crystal layer 30 side), a common electrode 14 of ITO (indium tin oxide) and the like having a thickness of 100 to 200 nm is formed over the entire display region 50 and the frame region 60. Thereon, a vertical alignment film (not shown) is arranged. Projections for liquid crystal alignment control 15 are arranged on the VA film in the display region 50. In the frame region 60, a projection material film 16, which is formed in the same film-forming and patterning steps as those of the projections 15, is arranged. Each of the projection 15 and the film 16 has a thickness of 1000 to 1500 nm. A photosensitive resin and the like are mentioned as a material for the projections 15 and the film 16. In this embodiment, an acrylic photosensitive resin with a resistance of 5 x 10¹⁶ Ωm is used. Fig. 2 is a plan view schematically showing a configuration in the vicinity of the frame region of the liquid crystal display device in accordance with Embodiment 1. As shown in Fig. 2, the film 16 is provided with openings 17 having a square shape with a length of 50 µm on each side.

A production method of the liquid crystal display device of Embodiment 1 is mentioned.
According to this production method, a configuration for four CF substrates is formed on one mother glass at one time and then divided into four. Thereby, four CF substrates are produced. Similarly to the CF substrates, a configuration for four TFT substrates is formed on one mother glass at one time and then divided into four. Thereby, four TFT substrates are produced. Hereinafter, a board having the configuration for a plurality of CF substrates before being divided is referred to as a CF motherboard, and a board having the configuration for a plurality of TFT substrates before being divided is referred to as a TFT mother board. Thus, a plurality of CF or TFT substrates are formed on one mother glass, leading to reduction in production costs. A board used for forming the CF motherboard or the TFT motherboard is referred to as a mother glass.

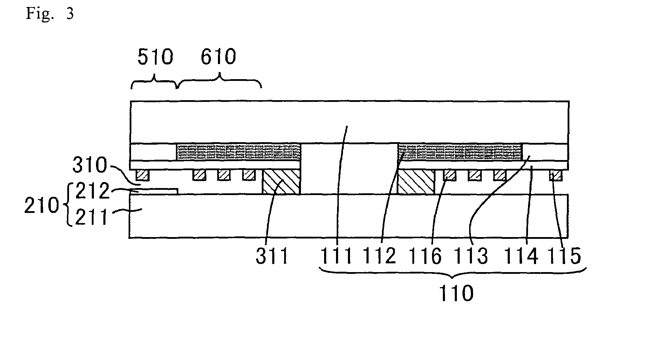

A production method of the CF motherboard is mentioned first. Fig. 3 is a cross-sectional view schematically showing a state where a CF motherboard 110 and a TFT motherboard 210 of Embodiment 1 have been attached to each other. A film of BM material such as a photosensitive resin containing a chrome metal and a black pigment is formed on a mother glass 111 and then patterned by photolithography to give a BM 112. On the mother glass 111 on which the BM 112 has been formed, materials of transparent photosensitive resin films of red, green, and blue, prepared by dispersing a pigment in a photosensitive resin composition, are applied by spin coating, etc., and then patterned into a specific shape by photolithography and the like. Thus, color filters 113 are formed. If color filters of two or more colors are formed as in the present Embodiment, a step of applying the photosensitive resin film, and the like, and a photolithography step are performed for every color.

Then, a transparent conductive film of ITO and the like is formed by sputtering and the like to form a common electrode 114. Then, a photosensitive resin film and the like is formed by spin coating etc., and then patterned by photolithography and the like. This patterning is performed in the following manner. A photosensitive resin film with a thickness of 1500 nm is vacuum-dried for 10 seconds and then irradiated with UV ray at 50 mJ/cm² with an exposure apparatus. The film is exposed through a mask having a desired pattern. Then, etching with an alkali developing solution is performed for 1 minute. As a result, projections for liquid crystal alignment control 115 are formed in a display region 510. Simultaneously, a projection material film 116 having square openings is formed in the frame region 610. These square openings each have rounded corners.
In the above-mentioned step, the CF motherboard 110 is produced.

A common production method can be applied to production of the TFT motherboard 210. A transparent conductive film of ITO and the like is formed by sputtering and the like on an element substrate 211 including TFTs and the like, and then patterned to give a pixel electrode 212. According to Embodiment 1, a projection for liquid crystal alignment control is not but may be formed on the TFT motherboard 210. In such a case, similarly to the CF motherboard 110, a projection material film may be formed in the frame region 610 in the film-forming and patterning step of the projection. If the projection material film is formed on both of the TFT motherboard and the CF motherboard, it is preferable that the films on the two substrates are formed so as to face each other. As a result, the difference in resistance between the substrates can be more increased between the positions with and without the projection material film.

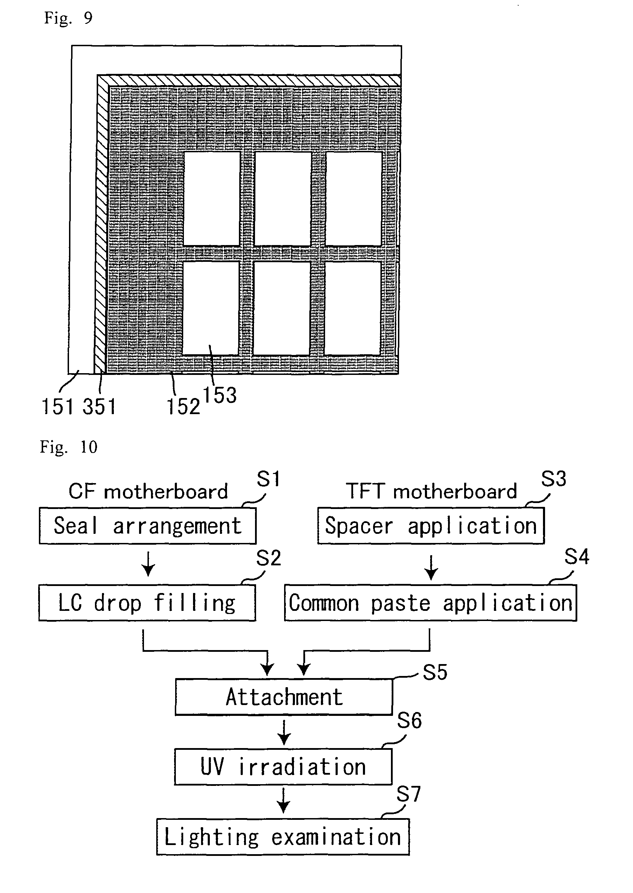

Fig. 10 shows a procedure of a step of attaching the substrates to each other in the liquid crystal display device in accordance with Embodiment 1. The step of attaching the CF motherboard to the TFT motherboard is explained with reference to Fig. 10.
A sealing member 311 for each CF substrate is arranged on the CF motherboard 110 (S1: Seal arrangement). Then liquid crystal materials are dropped on the CF motherboard 110 in a region surrounded by the sealing member 311, with a dispenser (S2: Liquid crystal drop filling). The quantity of the liquid crystal material dropped in the region is determined accordance with a cell thickness after the attachment of the two substrates 110 and 210. A material with negative dielectric anisotropy is used as the liquid crystal material and has a resistance of 5 x 10¹⁵ Ωm.

Spacers are spread over the TFT motherboard 210 (on the surface on which the pixel electrode 212 is formed) (S3: Spacer application). Then, a common paste is arranged on the TFT motherboard 210 for conduction between the two substrates 110 and 210 (S4: Common paste application). The common paste is arranged on the inside of a region sealed by the sealing member 311.

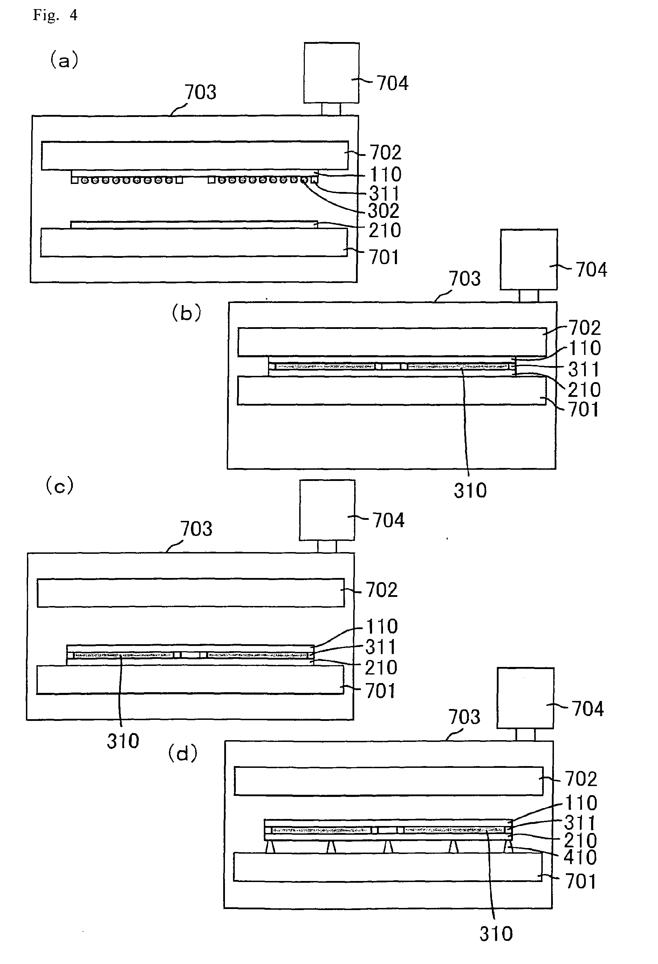

A step of attaching the CF motherboard 110 to the TFT motherboard 210 (S5: Attachment) is mentioned with reference to Figs. 4(a) to 4(d). Fig. 4 is a cross-sectional view schematically showing a procedure of the attachment step. Fig. 4(a) is a cross-sectional view schematically showing a state where the CF motherboard and the TFT motherboard have been arranged in a chamber. Fig. 4(b) is a cross-sectional view schematically showing a state where the CF motherboard and the TFT motherboard have been attached in the chamber. Fig. 4 (c) is a cross-sectional view schematically showing a state where the attached motherboards have been detached from the upper stage. Fig. 4 (d) is a cross-sectional view schematically showing a state where the attached motherboards to be taken out from the chamber have been pushed up by electrically conductive pins of the lower stage. According to Embodiment 1, the substrate is held by electrostatic chuck in the following manner. An upper stage 702, which holds the substrates, is made of an insulator and includes electrodes formed thereinside. The CF motherboard 110 includes an insulator is arranged on a lower stage 701 and then brought into contact with the upper stage 702. Then, a voltage is applied, thereby generating coulomb force between the CF motherboard 110 and the upper stage 702. Thus, the CFmotherboard 110 is held by this coulomb force. According to this substrate-holding way using electrostatic chuck, the substrate can be uniformly held by the entire stage. Differently from mechanical holding, a large-sized substrate can be stably held. Thus, this substrate-holding way using electrostatic chuck is preferably applied to attachment of motherboards for liquid crystal display devices, which need an increase in size of substrates and highly accurate attachment of substrates.

As shown in Fig. 4(a), a vacuum pump 704 is connected to a chamber 703, the inside of which can be evacuated, and the chamber 703 includes the lower stage 701 and the upper stage 702 thereinside. The upper stage 702 includes an electrode formed thereinside and has a function as electrostatic chuck. According to the present Embodiment, as shown in Figs. 4(a) to 4(d), the TFT motherboard 210 is arranged on an upper face of the lower stage 701 and the CF motherboard 110 is arranged on a lower face of the upper stage 702. Then, the pressure inside the chamber 703 is reduced to almost 20 Pa. A voltage of 2000V is applied to the electrodes of the upper stage 702, thereby holding the CF motherboard 110. The CF motherboard 110 is held with the surface on which liquid crystal material 302 has been dropped facing the low direction, and the TFT motherboard 210 is held with the surface on which the pixel electrode 212 has been formed facing the upper direction. The voltage applied to the electrostatic chuck is not limited to 2000V, and it is determined based on safety of the substrate holding. The voltage is preferably 1800 V or higher for stable substrate-holding.

Then, the lower stage 701 is moved to be set at a position suitable for attachment and then moved up, and thereby as shown in Fig. 4(b), the CF motherboard 110 is attached to the TFT motherboard 210. Then the voltage application to the electrode of the stage 702 is terminated, and the inside of the chamber 703 is brought to atmospheric pressure by introducing nitrogen thereinto. Then the attached CF motherboard 110 and the TFT motherboard 210 (the attached motherboards) are detached from the upper stage 702 by moving down the lower stage 701.

Then as shown in Fig. 4(d), the attached motherboards are pushed up by electrically conductive pins 410 arranged inside the lower stage 701. A tool for taking out the motherboards from the chamber is inserted between the pins, and thereby the attached motherboards are taken out from the chamber 703. Thus the pins 410 have a function of pushing the attached motherboards up toward the upper direction from the stage face and a function of discharging charges accumulated in the substrate at the time of the electrostatic chuck. The pins 410 are organic film-coated metal pins. The time of contact between the attached motherboards and the pins 410, from when the motherboards are pushed up by the pins to when taken out from the chamber, is about 5 seconds. According to the present Embodiment, the projection material film 116 in the frame region 610 has a plurality of square openings, and therefore charges accumulated in the substrate during the above-mentioned contact time can be sufficiently discharged through the pins 410.

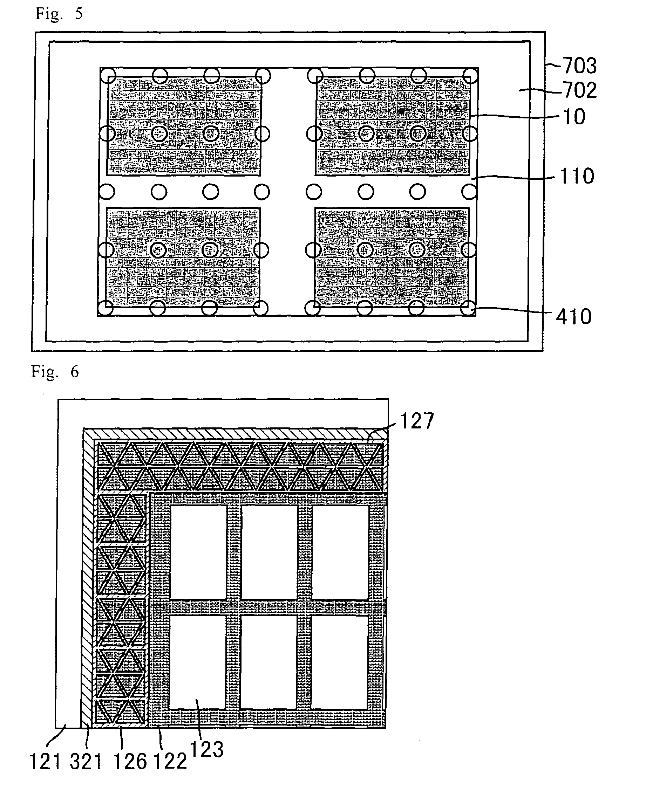

Fig. 5 is a plan view schematically showing an arrangement relationship between the attached motherboards and the pins in the chamber. The pins 410 have a substantially conical shape having a flat top, like a shape formed by cutting the top of a cone in a direction parallel to the bottom surface thereof. These flat surfaces are in contact with the attachedmotherboards. The shape of the pins 410 in Fig. 5 shows a shape of the above-mentioned flat surface. The tool for taking out the motherboards is inserted between the pins 410 from the left side of Fig. 5 to taken out the attached motherboards from the chamber 703.

Then the sealing member is cured by irradiating a region
where the sealing member is arranged with UV ray with an UV irradiator through a photomask located above the attached motherboards (S6: UV irradiation).

Then, lighting examination (S7: Lighting examination) is performed. If discharge from the substrate is insufficient, uneven display is generated at a portion where the pin 410 was in contact with the CF motherboard 100 shown in Fig. 5. According to the present Embodiment, the charges are sufficiently discharged from the frame region, so that temporarily uneven display, which is possibly generated due to the charges accumulated in the substrate, can be effectively suppressed. This can suppress this panel from being regarded as defective based on the temporarily uneven display, which can be solved by discharge in a lighting examination step. As a result, an additional process, reexamination, and the like, which need to be performed after the lighting examination step, can be decreased, and the liquid crystal display device can be stably produced.

Then, the attached motherboards are divided to give four liquidcrystaldisplaypanels. Apolarizer, aretarder, adriver, and the like, are mounted on each liquid crystal display panel, and as a result, liquid crystal display devices of Embodiment 1 are completed.

Thus, according to the present Embodiment, the charges accumulated in the substrate during the electrostatic chuck can be sufficiently discharged through the square openings of the projection material film 116 in the frame region 610. So in the liquid crystal display panel, uneven display which is caused when the accumulated charges remaining in the substrate disables proper control of liquid crystal alignment can be suppressed from being detected in the lighting examination.

### Embodiment 2

Fig. 6 is a plan view schematically showing a part of a CF substrate constituting a liquid crystal display device in accordance with Embodiment 2. The liquid crystal display device of Embodiment 2 has the same configuration as in Embodiment 1 except for the shape of the projection material film. According to Embodiment 2, color filters 123 are arranged in a display region of a substrate 121. A BM 122 is arranged between the color filters 123 and in the frame region. A common electrode is arranged on the BM 122 and the color filters 123, but not shown in Fig. 6 because an arrangement relationship of a projection material film 126 and others is clearly shown. The projection material film 126 is arranged on the common electrode in the frame region. The film 126 is provided with a plurality of triangular openings 127. The triangular openings each have rounded corners. A sealing member 321 is arranged on the outside of the frame region.

Also according to the present Embodiment, the charges accumulated in the substrate during the electrostatic chuck can be sufficiently discharged through the plurality of triangular openings 127 of the projection material film 126 in the frame region. So in the liquid crystal display panel, uneven display which is caused when the accumulated charges remaining in the substrate disables proper control of liquid crystal alignment can be suppressed from being detected in the lighting examination.

### Embodiment 3

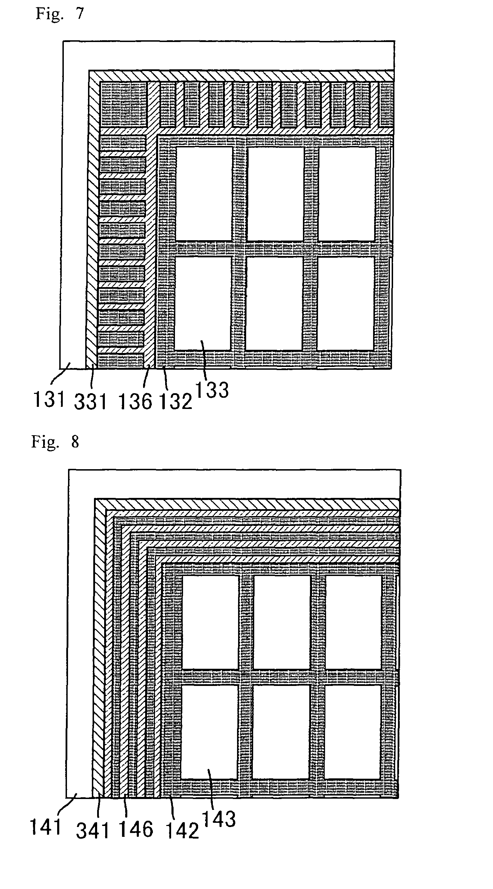

Fig. 7 is a plan view schematically showing a part of a CF substrate constituting a liquid crystal display device in accordance with Embodiment 3. The liquid crystal display device of Embodiment 3 has the same configuration as in Embodiment 1 except for the shape of the projection material film. According to Embodiment 3, color filters 133 are arranged in a display region of a substrate 131. A BM 132 is arranged between the color filters 133 and in a frame region. A common electrode is arranged on the BM 132 and the color filters 133, but not shown in Fig. 7 because an arrangement relationship of a projection material film and others is clearly shown. On the common electrode in the frame region, a projection material film 136 patterned into a comb shape is arranged. The comb shape is composed of a body surrounding the periphery of the display region and branched portions extending in parallel to one another toward the outside of the substrate 121. The branched portions each have a width of 10 µm and are arranged spaced apart with a distance of 10 µm. A sealing member 331 is arranged on the outside of the frame region.

Also according to the present Embodiment, the charges accumulated in the substrate during the electrostatic chuck can be sufficiently discharged through the region free from the projection material film 136 in the frame region. So in the liquid crystal display panel, uneven display which is caused when the accumulated charges remaining in the substrate disables proper control of liquid crystal alignment can be suppressed from being detected in the lighting examination.

### Embodiment 4

Fig. 8 is a plan view schematically showing a part of a CF substrate constituting a liquid crystal display device in accordance with Embodiment 4. The liquid crystal display device in accordance with Embodiment 4 has the same configuration as in Embodiment 1 except for the shape of the projection material film. According to Embodiment 4, color filters 143 are arranged in a display region of a substrate 141. A BM 142 is arranged between the color filters 143 and in a frame region. A common electrode is arranged on the BM 142 and the color filters 143, but not shown in Fig. 8 because an arrangement relationship of a projection material film and others is clearly shown. A plurality of projection material films 146 each of which is arranged in a circular pattern to surround the display region are arranged on the common electrode in the frame region. The films 146 each have a line-width of 10 µm and are arranged in a stripe pattern with a distance of 10 µm to one another. The sealing member 341 is arranged on the outside of the frame region.

Also according to the present Embodiment, the charges accumulated in the substrate during the electrostatic chuck can be sufficiently discharged through the region free from the projection material films 146 in the frame region. So in the liquid crystal display panel, uneven display which is caused when the accumulated charges remaining in the substrate disables proper control of liquid crystal alignment can be suppressed from being detected in the lighting examination.

### Embodiment 5

Fig. 9 is a plan view schematically showing a part of a CF substrate constituting a liquid crystal display device in accordance with Embodiment 5. The liquid crystal display device of Embodiment 5 has the same configuration as in Embodiment 1 except that the projection material film is not arranged in the frame region. According to Embodiment 5, color filters 153 are arranged in a display region of a substrate 151 and a BM 152 is arranged between the color filters 153 and in a frame region. A common electrode (not shown) is formed on the BM 152 and the color filters 153. A sealing member 351 is arranged on the outside of the frame region.

Also according to the present Embodiment, the charges accumulated in the substrate during the electrostatic chuck can be sufficiently discharged through the frame region free from the projection material film. So in the liquid crystal display panel, uneven display which is caused when the accumulated charges remaining in the substrate disables proper control of liquid crystal alignment can be suppressed from being detected in the lighting examination.

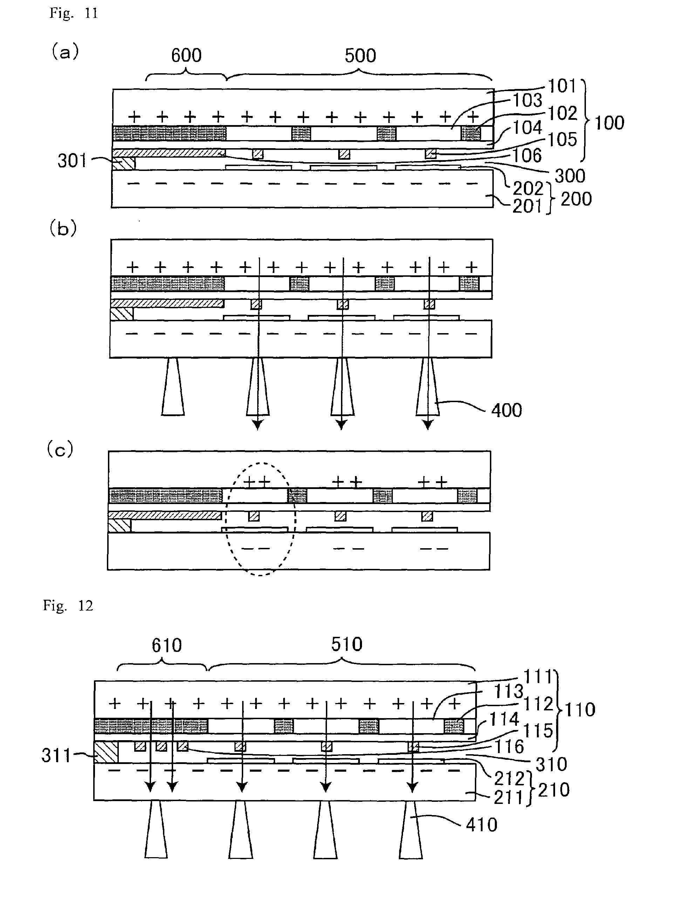

Explanation of a step of discharging charges remaining in the substrate
A step of discharging remaining charges by putting electrically conductive pins against the substrate is mentioned with reference to Figs. 11(a) to 11(c) and Fig. 12.

Figs. 11(a) to 11(c) are cross-sectional views schematically showing a discharge process in a liquid crystal display device having the same configuration as in Embodiment 1 except that a projection material film 106 is arranged over the entire frame region. According to the liquid crystal display device shown in Fig. 11, a CF substrate 100 and a TFT substrate 200 are attached to each other by a sealing member 301. The CF substrate 100 has a configuration that color filters 103 are formed in regions corresponding to pixels of a substrate 101, and a black matrix 102 is formed between the color filters 103, and thereon a common electrode 104 is formed. Projections for liquid crystal alignment control 105 are arranged on the common electrode 104 in the display region, and a projection material film 106 is arranged over the entire frame region. The TFT substrate 200 has such a configuration that pixel electrodes 202 are formed in regions corresponding to pixels on a TFTs-including substrate 201.

Fig. 11(a) is a cross-sectional view schematically showing a pair of motherboards which has been produced by attaching the CF substrate being held by electrostatic chuck to the TFT substrate, and then detaching the substrates from an upper stage by terminating the voltage application. In the drawings, "+" shows a positive charge and "-" shows a negative charge, and the arrow shows flow of the charges. Fig. 11(b) is a cross-sectional view schematically showing a state where the motherboards to be taken out from a chamber are pushed up from a lower stage with electrically conductive pins. Fig. 11(c) is a cross-sectional view schematically showing a state of charges remaining in the substrate after the motherboards are taken out from the chamber. Charges remain in the substrate at the portion circled by the dotted line.

As shown in Fig. 11(a), a voltage is applied to the CF substrate 100 during the electrostatic chuck, and so charges are accumulated in the substrate 101 or the color filters 103, and positive charges accumulated in the CF substrate 100 induce negative charges in the TFT substrate 200. Then, as shown in Fig. 11(b), the pins 400 of the lower stage on which the attached motherboards are arranged push up the attached motherboards to be taken out from the chamber. The charges accumulated in the substrate or the substrates are discharged from the portions
where the pins 400 in a display region 500 were in contact with the substrate through the liquid crystal layer 300. If the projection material film 106, which is formed simultaneously with the projections 105, is arranged in an entire frame region 600, the resistance between the motherboards in the frame region 600 is high, and discharge from the frame region 600 is hard. This results in insufficient discharge of the charges accumulated in the substrate, and as shown in Fig. 11(c), the charges remain at the portions where the pins 400 were in contact with the substrate in the display region 500. In the display region where the charges remain, liquid crystal alignment is not properly controlled, resulting in uneven display, which can be detected when the device is driven.

Fig. 12 is a cross-sectional view schematically showing a discharge process in the liquid crystal display device of Embodiment 1. According to the liquid crystal display device of Embodiment 1, as shown in Fig. 12, a the projection material film 16 is arranged at portions of a frame region 60 by selectively removing the projection material film. So the resistance between the motherboards in the frame region 60 can be decreased. According to this, discharge of the charges accumulated in the substrate from the frame region can be accelerated as shown by the arrow in Fig. 12. This can suppress the charges from remaining in the display region.

The present application claims priority to Patent Application No. 2007-207070 filed in Japan on August 8, 2007 under the Paris Convention and provisions of national law in a designated State, the entire contents of which are hereby incorporated by reference.

### BRIEF DESCRIPTION OF DRAWINGS

[Fig. 1]
   Fig. 1 is a cross-sectional view schematically showing the liquid crystal display device in accordance with Embodiment 1.
[Fig. 2]
   Fig. 2 is a plan view schematically showing a configuration in the vicinity of the frame region of the liquid crystal display device in accordance with Embodiment 1.
[Fig. 3]
   Fig. 3 is a cross-sectional view schematically showing a state where the CF motherboard and the TFT motherboard of Embodiment 1 have been attached to each other.
[Fig. 4]
   Fig. 4 is a cross-sectional view schematically showing a procedure of the attachment step.
   Fig. 4(a) is a cross-sectional view schematically showing a state where the CF motherboard and the TFT motherboard have been arranged in a chamber.
   Fig. 4(b) is a cross-sectional view schematically showing a state where the CF motherboard and the TFT motherboard have been attached to each other in the chamber.
   Fig. 4(c) is a cross-sectional view schematically showing a state where the attached motherboards have been detached from the upper stage.
   Fig. 4(d) is a cross-sectional view schematically showing a state where the attached motherboards to be taken out from the chamber have been pushed up by electrically conductive pins of the lower stage.
[Fig. 5]
   Fig. 5 is a plan view schematically showing an arrangement relationship between the attached motherboards and the pins in the chamber in the attachment step.
[Fig. 6]
   Fig. 6 is a plan view schematically showing a part of the CF substrate constituting the liquid crystal display device in accordance with Embodiment 2.
[Fig. 7]
   Fig. 7 is a plan view schematically showing a part of the CF substrate constituting the liquid crystal display device in accordance with Embodiment 3.
[Fig. 8]
   Fig. 8 is a plan view schematically showing a part of the CF substrate constituting the liquid crystal display device in accordance with Embodiment 4.
[Fig. 9]
   Fig. 9 is a plan view schematically showing a part of the CF substrate constituting the liquid crystal display device in accordance with Embodiment 5.
[Fig. 10]
   Fig. 10 shows a process of the attachment step in the liquid crystal display device in accordance with Embodiment 1.
[Fig. 11]
   Fig. 11 is a cross-sectional view schematically showing the discharge process in the liquid crystal display device having the same configuration as in Embodiment 1 except that the projection material film is arranged over the entire frame region.
   Fig. 11(a) is a cross-sectional view schematically showing the motherboards which have been detached from an upper stage by terminating the voltage application to the substrate held by electrostatic chuck.
   Fig. 11(b) is a cross-sectional view schematically showing a state where the motherboards to be detached from a lower stage are pushed up from the lower stage with electrically conductive pins.
   Fig. 11(c) is a cross-sectional view schematically showing a state of charges remaining in the substrate after the motherboards are detached from the lower stage.
[Fig. 12]
   Fig. 12 is a cross-sectional view schematically showing the discharge process in the liquid crystal display device of Embodiment 1.

### EXPLANATION OF NUMERALS AND SYMBOLS

10: Color filter (CF) substrate
11, 101, 121, 131, 141, 151: Substrate
12, 102, 112, 122, 132, 142, 152: Black matrix (BM)
13, 103, 113, 123, 133, 143, 153: Color filter
14, 104, 114: Common electrode
15, 105, 115: Projection for liquid crystal alignment control
16, 106, 116, 126, 136, 146: Projection material film
17, 127: Opening
20, 200, 210: Thin film transistor (TFT) substrate
21, 201, 211: Element substrate
22, 202, 212: Pixel electrode
30, 300, 310: Liquid crystal layer
31, 301, 311, 321, 331, 341, 351: Sealing member
400, 410: Conductive pin
50, 500, 510: Display region
60, 600, 610: Frame region
100, 110: Color filter (CF) motherboard
111: Mother glass
302: Liquid crystal material
701: Lower stage
702: Upper stage
703: Chamber
704: Vacuum pump

## Claims

1. A liquid crystal display device comprising:
a pair of substrates facing each other;
a liquid crystal layer interposed between the pair of substrates; and
a sealing member surrounding the liquid crystal layer and attaching the pair of substrates to each other,
wherein at least one of the pair of substrates includes a projection for liquid crystal alignment control in a display region, and
further includes, in a frame region that is positioned between the display region and the sealing member, a region free from a film made of a material for the projection.

2. The liquid crystal display device according to Claim 1,
wherein the liquid crystal display device includes a region where the filmmade of the material for the projection is arranged in the frame region of the projection-including substrate.

3. The liquid crystal display device according to Claim 2,
wherein the projection-including substrate includes a first conductive film in the display region, and further includes, in the frame region, a second conductive film formed in continuity with the first conductive film or a third conductive film made of a material for the first conductive film, and
the filmmade of the material for the projection is arranged on the second or third conductive film.

4. The liquid crystal display device according to Claim 2 or 3,
wherein the film made of the material for the projection is formed into a stripe or comb shape.

5. The liquid crystal display device according to any one of Claims 2 to 4,
wherein the film made of the material for the projection has an opening.

6. The liquid crystal display device according to Claim 5,
wherein the opening has an angular shape.

7. The liquid crystal display device according to Claim 1,
wherein the film made of the material for the projection is not arranged in the frame region of the projection-including substrate.

8. The liquid crystal display device according to Claim 7,
wherein the projection-including substrate includes a first conductive film in the display region, and further includes, in the frame region, a second conductive film formed in continuity with the first conductive film or a second conductive film made of a material for the first conductive film.

9. The liquid crystal display device according to Claim 3, 4, 5, 6, or 8,
wherein the projection-including substrate is a color filter substrate, and
the first and second conductive films are common electrodes.

10. Aproductionmethod of a liquid crystal display device including a pair of substrates facing each other, a liquid crystal layer interposed between the pair of substrates, and a sealing member surrounding the liquid crystal layer and attaching the pair of substrates to each other,
the production method comprising:
a film-forming step of forming a projection material film for constituting a projection for liquid crystal alignment control in a display region and a frame region that is between the display region and the sealing member of at least one of the pair of substrates;
a patterning step of partly removing the projection material film to form the projection in the display region and to form a region free from the projection material film in the frame region; and
a holding step of holding the projection-including substrate by electrostatic chuck.

11. The production method according to Claim 10, comprising a step of forming a conductive film over the display region and the frame region before the film-forming step.

12. The production method according to Claim 10 or 11,
wherein the projection-including substrate that is being held in the holding step is attached to the other substrate, and
the production method further comprises a discharge step of putting an electrically conductive pin against the other substrate.
